(19) Europäisches Patentamt
European Patent Office
Office européen des brevets

(11) **EP 3 473 461 B1**

(12) **EUROPEAN PATENT SPECIFICATION**

(45) Date of publication and mention
of the grant of the patent:
**20.05.2020 Bulletin 2020/21**

(51) Int Cl.:
***B60K 1/00*** *(2006.01)* ***B60K 23/04*** *(2006.01)*
***B60K 23/08*** *(2006.01)*

(21) Application number: **18191334.4**

(22) Date of filing: **28.08.2018**

(54) **DRIVING FORCE ADJUSTMENT APPARATUS**

ANTRIEBSKRAFTANPASSUNGSVORRICHTUNG

APPAREIL DE RÉGLAGE DE LA FORCE D'ENTRAÎNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.09.2017 JP 2017168706**

(43) Date of publication of application:
**24.04.2019 Bulletin 2019/17**

(73) Proprietor: **Mitsubishi Jidosha Kogyo Kabushiki
Kaisha
Tokyo 108-8410 (JP)**

(72) Inventor: **YAMAMURA, Takuya
Tokyo, 108-8410 (JP)**

(74) Representative: **Regimbeau
20, rue de Chazelles
75847 Paris Cedex 17 (FR)**

(56) References cited:
**DE-B4- 19 680 744      JP-A- 2007 177 915
JP-A- 2014 037 884      US-A1- 2010 234 162**

**Description**

FIELD

This disclosure relates to an apparatus that adjusts driving forces of the left and right wheels of a vehicle.

BACKGROUND

A driving force adjustment apparatus is known to the inventors in which a differential apparatus interposed between the left and right wheels of a vehicle and a planetary gear mechanism and a motor are combined such that distribution of the driving force (torque distribution) between the left and right wheels can be changed. In such a driving force adjustment apparatus as just described, the motor rotates passively in response to the difference between rotational speeds of the left and right wheels upon turning of the vehicle to absorb the rotational speed difference. Further, as the motor operates, the driving force difference between the left and right wheels increases or decreases to change the distribution of the driving force between the left and right wheels. On the other hand, if rotation of the motor is restrained, then the differential action is limited and the traction performance is improved (e.g. JP 2007-177915 A, JP 2014-037884 A) .

Since a conventional driving force adjustment apparatus has a structure in which a mechanism to adjust the distribution of the driving force is separated from a driving force transmission route for traveling, it has a subject that the size and the weight of the apparatus are liable to increase and downsizing is difficult. In particular, the driving force adjustment apparatus disclosed in JP 2007-177915 A has a complex structure in which two pairs of planetary gear mechanisms to adjust the distribution of the driving force are disposed on the vehicle shaft, and therefore tends to be enlarged in the vehicle widthwise direction.

SUMMARY

TECHNICAL PROBLEMS

The present invention has been made in view of such a subject as described above, and it is an object of the present invention to provide a driving force adjustment apparatus that achieves the traveling function and the driving force adjusting function with a lightweight and simple structure.

SOLUTION TO PROBLEMS

To attain the above object, a driving force adjustment apparatus includes: a differential apparatus that interposes a differential gear supported by a differential case between a left shaft and a right shaft of driving wheels; a driving source that drives the driving wheels; an adjusting motor that adjusts a driving force difference between the left shaft and the right shaft; and a planetary gear mechanism of three elements and two degree-of-freedom. The driving force adjustment apparatus further includes a driving shaft that is coupled to a first element of the planetary gear mechanism and that is coaxially arranged with the planetary gear mechanism; a first gear train that adjusts a reduction ratio between a second element of the planetary gear mechanism and one of the left shaft and the right shaft and that couples the second element to the one of the left shaft and the right shaft; a second gear train that adjusts a reduction ratio between the driving shaft and the differential case of the differential apparatus and that couples the driving shaft to the differential case; a third gear train that adjusts a reduction ratio between the driving source and the driving shaft and that couples the driving source to the driving shaft; and a fourth gear train that adjusts a reduction ratio between a third element of the planetary gear mechanism and the adjusting motor and that couples the third element to the adjusting motor.

ADVANTAGEOUS EFFECTS

In the driving force adjustment apparatus disclosed herein, the driving shaft and the second gear train have a function to transmit the driving force of the driving source to the vehicle shaft and a function to transmit the driving force of an adjusting motor to the vehicle shaft. By integrating two kinds of power transmission routes into the driving shaft and the second gear train and coupling the integrated power transmission routes to the differential case of the differential apparatus, increase in the number of parts can be avoided and the traveling function and the driving force adjusting function can be achieved lightly and simply.

BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:
FIG. 1 is a skeleton diagram of a driving force adjustment apparatus according to an embodiment;
FIGs. 2A to 2C are skeleton diagrams enlarging the principle parts of FIG 1;
FIGs. 3A to 3C are diagrams describing a first state of a dog clutch;
FIGs. 4A and 4B are diagrams describing a second state of a dog clutch;
FIGs. 5A and 5B are diagrams describing a third state of a dog clutch;
FIG. 6 is a skeleton diagram of a driving force adjustment apparatus according to a modification;
FIG. 7 is a skeleton diagram of a driving force adjustment apparatus according to another modification; and
FIG. 8 is a skeleton diagram of a driving force adjustment apparatus according to a further modification.

DESCRIPTION OF EMBODIMENTS

[1. Structure]

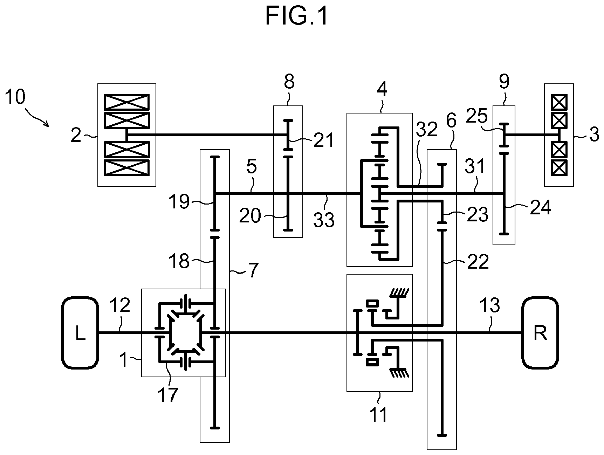

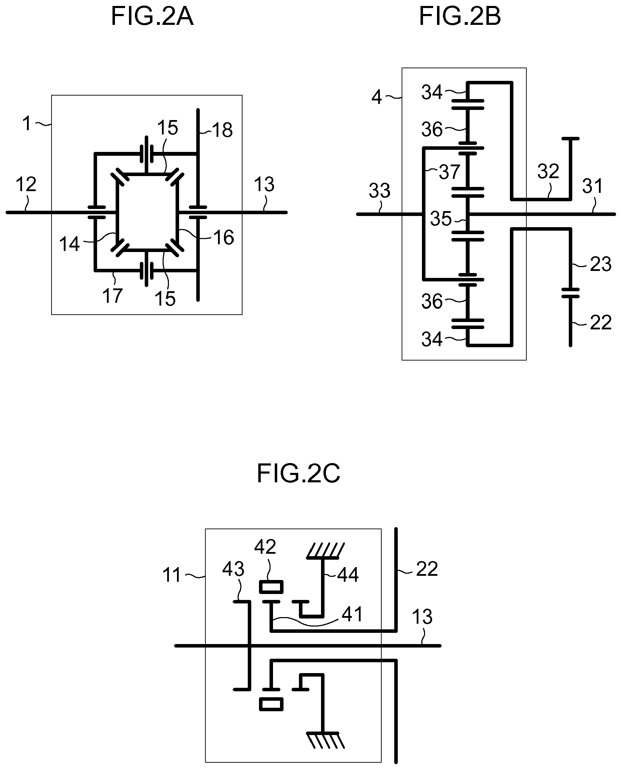

In the following, a driving force adjustment apparatus 10 as an embodiment is described with reference to the drawings. The driving force adjustment apparatus 10 of FIG. 1 compatibly has a function for transmitting the driving force transmitted from the driving source of a vehicle to the left and right wheels to let the vehicle travel, and a function for passively absorbing the difference between the rotational speeds of the left and right wheels appearing when the vehicle is turning, and a function for actively adjusting the difference between the rotational speeds of the left and right wheels to change the torque distribution. The driving force adjustment apparatus 10 is applicable to either the front or rear wheel. The driving force adjustment apparatus 10 is interposed between the left and right wheels.
The driving force adjustment apparatus 10 includes a differential apparatus 1, a traveling motor 2 (driving source), an adjusting motor 3, a planetary gear mechanism 4, a driving shaft 5, a first gear train 6, a second gear train 7, a third gear train 8, a fourth gear train 9, and a dog clutch 11 (changeover mechanism). The differential apparatus 1 is a differential apparatus configured by interposing a differential gear supported by a differential case 17 (differential apparatus case) in the form of a container between a left shaft 12 and a right shaft 13. Hereinafter, the left shaft 12 and the right shaft 13 are sometimes simply referred to as the vehicle shafts 12 and 13.
As illustrated in FIG. 2A, a left bevel gear 14 coupled to the left shaft 12, differential pinion gears 15 pivotally supported on the differential case 17, and a right bevel gear 16 coupled to the right shaft 13 are accommodated in a mutually meshing state in the inside of the differential case 17. The left bevel gear 14, the differential case 17, and the right bevel gear 16 are capable of transmitting power to one another, and have respective structures (positions, shapes, and teeth numbers) set such that the rotation speeds thereof on the alignment chart are linearly arranged in this sequence. The rotation shafts of the left bevel gear 14 and the right bevel gear 16 are collinearly arranged while the rotation shafts of the differential pinion gears 15 arranged perpendicularly to those of the left bevel gear 14 and the right bevel gear 16.
The traveling motor 2 is an electric motor to drive the driving wheels of the vehicle and is an example of the driving source. Alternative driving source is a gasoline engine or a diesel engine. The traveling motor 2 functions to provide equivalent driving force both to the left shaft 12 and the right shaft 13 to each other by driving the differential case 17. In contrast, the adjusting motor 3 has a function to cause the left and right wheels to have a difference of the driving force and has the same function as that of the traveling motor 2. Accordingly, the vehicle of the present embodiment allows the motor 2 to solely drive the driving wheels with the traveling motor 2 as well as allowing the adjusting motor 3 to driving the driving wheels solely or in cooperation with the motor 2.
The electric power to drive the traveling motor 2 and the adjusting motor 3 is supplied from a non-illustrated on-vehicle battery. The driving forces of the motors 2 and 3 are controlled by a non-illustrated electronic controlling apparatus (computer). For example, when the motors 2 and 3 are AC electric motors, the electronic controlling apparatus controls the driving forces of the motors 2 and 3 by adjusting the frequencies of the AC electric power to be supplied to the motors 2 and 3. In contrast, when the motors 2 and 3 are DC electric motors, the electronic controlling apparatus controls the driving force of the motors 2 and 3 by adjusting the electric currents to be supplied to the motors 2 and 3.
As the transmission route of the driving force generated by the traveling motor 2, a route to reach the differential case 17 through the second gear train 7 and the third gear train 8 is set. As the transmission routes of the driving force generated by the adjusting motor 3, a route to reach the differential case 17 through the planetary gear mechanism 4, the second gear train 7, and the fourth gear train 9 is set, and a route to reach either of the vehicle shafts 12 or 13 though the planetary gear mechanism 4, the first gear train 6, the fourth gear train 9, and the dog clutch 11 is set.

As illustrated in FIG. 2B, the planetary gear mechanism 4 is a single-pinion planetary gear mechanism of three elements and two degree-of-freedom including a sun gear shaft 31, a ring gear shaft 32 and a planetary carrier shaft 33 disposed coaxially with one another. Inside the planetary gear mechanism 4, an annular ring gear 34, a sun gear 35 that is coaxially arranged with the ring gear 34 on the inner side the ring gear 34, a planetary gear 36 mesh both with the ring gear 34 and the sun gear 35, and a carrier 37 that supports the rotational center of the planetary gear 36 to be coaxially rotatable with the sun gear 35 are provided.

The sun gear shaft 31 is the rotation shaft of the sun gear 35, and the ring gear shaft 32 is the rotation shaft of the ring gear 34. The planetary carrier shaft 33 is the rotation shaft of the carrier 37 that supports the rotational center of the planetary gear 36. The sun gear 35, the carrier 37, and the ring gear 34 are capable of transmitting power to one another and have respective structures (positions, shapes, and teeth numbers) such that the rotation speeds thereof on the alignment chart are linearly arranged in this sequence. The position of the center of the planetary gear mechanism 4 (the sun gear shaft 31, the ring gear shaft 32, and the planetary carrier shaft 33) is disposed at a position offset from the left shaft 12 and the right shaft 13. The planetary gear mechanism 4 of the present embodiment is arranged at a position offset from the shafts 12 and 13 toward the front side of the vehicle. Hereinafter, the quotient obtained by dividing the teeth number of the ring gear 34 by the teeth number of the sun gear 35 is referred to as a reduction ratio $\rho_a$ (speed transmission ratio) of the planetary gear mechanism 4.

The driving shaft 5 is a shaft coupled to one of three shaft elements (the sun gear shaft 31, the ring gear shaft 32, and the planetary carrier shaft 33) included in the planetary gear mechanism 4. As illustrated in FIG. 1, the planetary carrier shaft 33 of the planetary gear mechanism 4 is coupled to the driving shaft 5 in the present embodiment. The driving shaft 5 is coaxially arranged with the planetary gear mechanism 4 (i.e., coaxially arranged with the sun gear shaft 31, the ring gear shaft 32, and the planetary carrier shaft 33), and is coupled to the second gear train 7 and the third gear train 8 that are to be detailed below. Here, one of the three shaft elements of the planetary gear mechanism 4 that is coupled to the driving shaft 5 is referred to as a first element.

The first gear train 6 is a gear train to couple one of the three shaft elements (except for the first element) of the planetary gear mechanism 4 to the left shaft 12 or the right shaft 13. The first gear train 6 of the present embodiment is coupled to the ring gear shaft 32 of the planetary gear mechanism 4. The first gear train 6 includes a right shaft side gear 22 and a ring gear side gear 23. The right shaft side gear 22 is arranged coaxially with the right shaft 13 and slidably with respect to the right shaft 13, and the ring gear side gear 23 is arranged coaxially with the planetary gear mechanism 4 and slidably with respect to the planetary gear mechanism 4. Here, one of the three shaft elements of the planetary gear mechanism 4 that is coupled to the first gear train 6 is referred to as a second element. The first gear train 6 has a function of adjusting the reduction ratio between the second element and one of the left shaft 12 and the right shaft 13. In the present embodiment, the quotient obtained by dividing the teeth number of the right shaft side gear 22 by the teeth number of the ring gear side gear 23 is referred to as a reduction ratio $\rho_1$ of the first gear train 6.

The second gear train 7 is a gear train to couple the driving shaft 5 to the differential case 17. The second gear train 7 includes a differential case side gear 18 and the driving shaft side gear 19. As illustrated in FIG. 1, the differential case side gear 18 is coaxially integrated with the differential case 17, and the driving shaft side gear 19 is coaxially coupled to the driving shaft 5. The second gear train 7 has a function of adjusting the reduction ratio between the driving shaft 5 and the differential case 17. In the present embodiment, the quotient obtained by dividing the teeth number of the differential case side gear 18 by the teeth number of the driving shaft side gear 19 is referred to as a reduction ratio $\rho_2$ of the second gear train 7 .

The third gear train 8 is a gear train to couple the traveling motor 2 to the driving shaft 5. The third gear train 8 includes a carrier side gear 20 and a traveling motor side gear 21. As illustrated in FIG. 1, the carrier side gear 20 is coaxially coupled both to the driving shaft 5 and the planetary carrier shaft 33. The traveling motor side gear 21 is coaxially coupled to the output shaft of the traveling motor 2. The third gear train 8 has a function of adjusting the reduction ratio between the driving source (traveling motor 2) and the driving shaft 5. In the present embodiment, the quotient obtained by dividing the teeth number of the carrier side gear 20 by the teeth number of the traveling motor side gear 21 is referred to as a reduction ratio $\rho_3$ of the third gear train 8.

The fourth gear train 9 is a gear train to couple the adjusting motor 3 to the remaining one element of the three shaft elements of the planetary gear mechanism 4, i.e., the shaft element except for the first element and the second element. The fourth gear train 9 of the present embodiment is coupled to the sun gear shaft 31 of the planetary gear mechanism 4. The fourth gear train 9 includes a sun gear side gear 24 and an adjusting motor side gear 25. The sun gear side gear 24 is coaxially coupled to the sun gear shaft 31, and the adjusting motor side gear 25 is coaxially coupled to the output shaft of the adjusting motor 3. Here, one of the three shaft elements of the planetary gear mechanism 4 that is coupled to the fourth gear train 9 is referred to as a third element. The fourth gear train 9 has a function of adjusting the reduction ratio between the adjusting motor 3 and the third element. In the present embodiment, the quotient obtained by dividing the teeth number of the sun gear side gear 24 by the teeth number of the adjusting motor side gear 25 is referred to as a reduction ratio p 4 of the fourth gear train 9.

As depicted in FIG. 1, the rotation shafts (output shafts) of the traveling motor 2 and the adjusting motor 3 are arranged in parallel with the vehicle shafts 12 and 13. Likewise, the rotation shafts (the three shaft elements) of the planetary gear mechanism 4 are also arranged in parallel with the vehicle shafts 12 and 13.

The dog clutch 11 (changeover mechanism) is interposed between one of the three shaft elements (the sun gear shaft 31, the ring gear shaft 32, and the planetary carrier shaft 33) of the planetary gear mechanism 4 and either one of the left shaft 12 and the right shaft 13. The dog clutch 11 has a function of switching a power transmission state via the first gear train 6 among three states. As illustrated in FIG. 2C, the dog clutch 11 of the present embodiment includes a first hub 41, a sleeve 42, a second hub 43 and a fixing hub 44 (fixing element).

The first hub 41 is an engaging element that rotates in synchronization with the ring gear 34 via the first gear train 6, and is coaxially integrated with the right shaft side gear 22. The sleeve 42 is disposed on the outer circumference of the first hub 41 and is slidably in the direction parallel with the rotation shaft of the first hub 41. The second hub 43 is an engaging element fixed to the right shaft 13. The fixing hub 44 is a rotation restraining member and is fixed to a member (e.g., a clutch case) that does not rotate.

On the respective outer circumference faces of the first hub 41, the second hub 43, and the fixing hub 44, projections are formed which extends in the parallel direction of the axis of the right shaft 13, which serves as the rotation shaft. In contrast, a recess groove fit to the projections is formed on the inner circumference face of the sleeve 42. The counterpart of engaging with the first hub 41 is switched by sliding the sleeve 42 and thereby three power transmission states of a first state, a second state, and a third state are achieved. The first state represents a state where the first hub 41 is engaged with the second hub 43; the second state represents a state where the sleeve 42 is engaged only with the first hub 41 and is not engaged with the second hub 43 and the fixing hub 44; and the third state represents a state where the first hub 41 is engaged with the fixing hub 44 and thereby the rotation of the right shaft side gear 22 and the ring gear side gear 23 of the first gear train 6 is restrained (i.e., a state where the ring gear shaft 32 is fixed). Accordingly, the dog clutch 11 has a function of causing one element (in the example of FIG. 1, the ring gear shaft 32) of the planetary gear mechanism 4 to be coupled to the second hub 43 (the first state), not to be coupled (the second state), and to be coupled to the fixing hub 44 (the third state).

The relationship among the reduction ratio $\rho_a$ of the planetary gear mechanism 4, the reduction ratio $\rho_1$ of the first gear train 6, and the reduction ratio $\rho_2$ of the second gear train 7 is set such that the rotational speed N of the adjusting motor 3 comes to be zero when the differential motion (i.e., the difference between the rotational speeds of the left and right wheels) of the differential apparatus 1 is absent. In addition, the relationship is set such that the driving force on the left shaft 12 generated by the adjusting motor 3 has the same absolute value as the driving force on the right shaft 13 generated by the adjusting motor 3, but the opposite sign to the driving force on the right shaft 13 generated by the adjusting motor 3. In the present embodiment, the relationship among the reduction ratio $\rho_a$, the reduction ratio $\rho_1$, and the reduction ratio $\rho_2$ is set such that following Formula (1) is satisfied. This means that the reduction ratio $\rho_1$ of the first gear train 6 is set to be the same value as the product of the quotient obtained by dividing the sum of the reduction ratio $\rho_a$ of the planetary gear mechanism 4 and one by the reduction ratio $\rho_a$ and the reduction ratio $\rho_2$ of the second gear train 7.

[Expression 1]

$$\rho_1 = \frac{(1 + \rho_a)}{\rho_a} \times \rho_2 \qquad (1)$$

The reduction ratio $\rho_3$ of the third gear train 8 is set such that following Formula (2) is satisfied. The term "required traveling driving force" in Formula (2) represents the driving force required for the vehicle to travel (the maximum value or the upper limit), and the term "traveling motor driving force" represents the driving force of the traveling motor 2 (the maximum value or the upper limit). The reduction ratio $\rho_3$ is set to a value obtained by multiplying the reciprocal of the reduction ratio $\rho_2$ of the second gear train 7 by the required traveling driving force and then dividing the obtained product by the traveling motor driving force.

[Expression 2]

$$\rho_3 = \frac{1}{\rho_2} \times \left( \frac{\text{required traveling driving force}}{\text{traveling motor driving force}} \right) \qquad (2)$$

Likewise, the reduction ratio $\rho_4$ of the fourth gear train 9 is set such that following Formula (3) is satisfied. In Formula (3), the term "required driving force difference between the left and right shafts" represents a difference between the driving forces provided to the left and right wheels of the vehicle (the maximum value or the upper limit) and the term "adjusting motor driving force" represents the driving force of the adjusting motor 3 (the maximum value or the upper limit). The reduction ratio $\rho_4$ is set to be a value obtained by multiplying the reciprocal of the product of the reduction

ratio $\rho_2$ of the second gear train 7 and a value obtained by adding one to the reduction ratio $\rho_a$ of the planetary gear mechanism 4 by the required driving force difference between the left and right shafts and then dividing the obtained product by the adjusting motor driving force.

[Expression 3]

$$\rho_4 = \frac{1}{\rho_2 \times (1 + \rho_a)} \times \left( \frac{\text{required driving force difference between the left and right shafts}}{\text{adjusting motor driving force}} \right) \qquad (3)$$

[2. Action]

[2-1. First State]

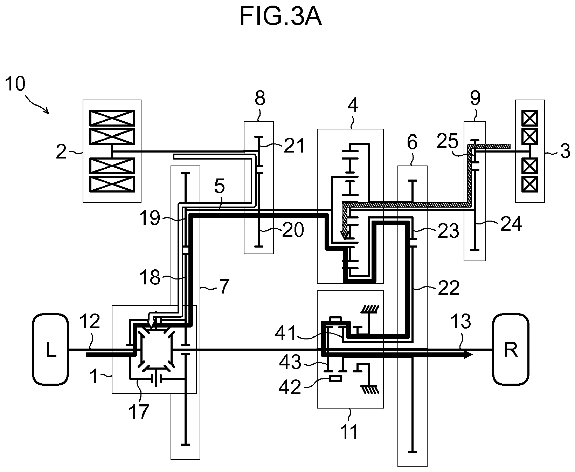

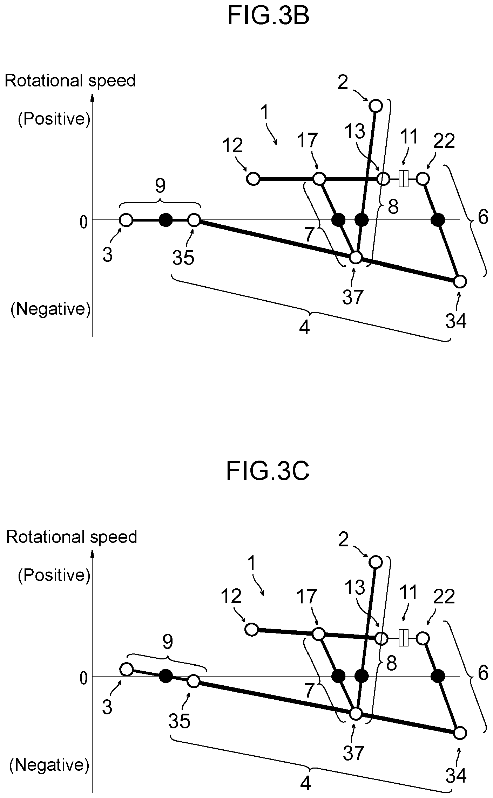

FIG. 3A is a skeleton diagram describing the power transmission route when the dog clutch 11 is in the first state and FIGs. 3B and 3C are alignment charts of the first state. An alignment chart simply expresses the relationship among rotational speeds (angular velocities) of multiple rotational elements correlated to one another. As shown in FIGs. 3B and 3C, the coordinate of the ordinate axis represents a rotational speed of a rotational element. The coordinate of the abscissa axis corresponding to the reference line at which the rotational speed comes to be zero is set in accordance with an angular velocity ratio (or a rotational speed ratio, a circumference length ratio, a teeth number ratio) based on one of the correlated rotational elements. Normally, the respective abscissa positions of the rotational elements are set in such a manner that the rotational speeds of the correlated rotational elements are on the same straight line regardless the magnitudes of the rotational speeds thereof. In other words, the abscissa positions are set such that the straight lines that connect each pair of the rotational elements has the collinear relationship.

As shown in FIG. 3A, when the dog clutch 11 is in the first state, the sleeve 42 is engaged with the second hub 43, and the planetary gear mechanism 4 is coupled to the right shaft 13 through the first gear train 6 and the dog clutch 11 and is further coupled to the differential case 17 through the second gear train 7. The black arrow in FIG. 3A represents a power transmission route between the left and right wheels using the former and latter couplings while the white arrow represents a power transmission route from the power source using the latter coupling. The reduction ratios of the planetary gear mechanism 4, the first gear train 6, and the second gear train 7 are set such that, when the differential apparatus 1 has no differential motion, the rotational speed N of the adjusting motor 3 comes to be zero. When the rotational speed N of the adjusting motor 3 is zero, the sun gear side gear 24 and the adjusting motor side gear 25 of the fourth gear train 9 do not rotate, so that the sun gear 35 of the planetary gear mechanism 4 stops. Accordingly, as illustrated in FIG. 3B, the alignment chart of the planetary gear mechanism 4 is represented by an inclined straight line that assumes the rotational speed of the sun gear 35 is zero and that declines as the abscissa approaches the right end.

In contrast, the differential apparatus 1 having no differential motion means that the rotational speed of the left shaft 12 is the same as the rotational speed of the right shaft 13. Namely, the state of the differential apparatus 1 on the alignment chart is represented by a straight line parallel to the reference line (i.e., the lateral line representing a rotational speed of zero), and the right shaft side gear 22 is positioned on the extension of the reference line. At that time, the rotational speed ratio between the ring gear side gear 23 of the first gear train 6 and the driving shaft side gear 19 of the second gear train 7 corresponds to a ratio between the distance from the sun gear 35 to the ring gear 34 on the alignment chart (i.e., the sum of the reciprocal of the teeth number of the ring gear 34 and the reciprocal of the teeth number of the sun gear 35) and the distance from the sun gear 35 to the carrier 37 on the alignment chart (i.e., the reciprocal of the teeth number of the sun gear 35). Accordingly, the alignment chart comes to be stable in a state shown in FIG. 3B and the left shaft 12 and the right shaft 13 are equally driven. At this time, the differential pinion gear 15 of the differential apparatus 1 passively rotates in accordance with a rotational speed difference between the left and right wheels and thereby the rotational speed difference is absorbed.

When a rotational speed difference between the left and right wheels is intended to be actively generated by activating the adjusting motor 3, as indicated by the hatched arrow of FIG. 3A, the driving force of the adjusting motor 3 is input into the sun gear shaft 31 of the planetary gear mechanism 4, and thereby the rotational speed of the sun gear 35 changes. In contrast, the rotational speeds of the sun gear 35, the carrier 37, and the ring gear 34 are in the collinear relationship. When the rotational speed of the traveling motor 2 is unchanged, the rotational speed of the carrier 37 is not changed. Accordingly, the change of the rotational speed of the sun gear 35 is reflected in the rotational speed of the ring gear 34 and thereby the rotational speed of the right shaft side gear 22 of the first gear train 6 is changed. Consequently, the rotational speed of the right shaft 13 is also changed through the dog clutch 11, so that a rotational speed difference between the left and right wheels is generated. The magnitude and the direction of the rotational speed difference correspond to the rotation amount and the rotation direction of the adjusting motor 3. Since the rotational speeds of the left shaft 12, the differential case 17, and the right shaft 13 are in the collinear relationship, the change of the rotational speed (driving force) of the right shaft 13 generated by the adjusting motor 3 has the same absolute value as but the opposite sign to the change of the rotational speed (driving force) of the left shaft 12.

The traveling driving force F (total value) on the left and right wheels and the driving force difference D (actively applied difference between the driving forces of the left shaft 12 and the right shaft 13) between the left and right driving shafts in the first state are given by following Formulae (4) and (5), respectively. The rotational speed N of the adjusting motor 3 is given by following Formula (6). The term "driving force of the traveling motor" in Formula (4) represents the driving force of the traveling motor 2 at the time point in question (actual driving force, target driving force), and the term "driving force of the adjusting motor" in Formula (5) represents the driving force of the adjusting motor 3 at the time point in question (actual driving force, target driving force). Likewise, the term "rotational speed difference between the left and right shafts" in Formula (6) represents the difference between the rotational speeds of the left shaft 12 and the right shaft 13 at the time point in question.

[Expression 4]

$$\text{traveling driving force } F = \rho_2 \times \rho_3 \times (\text{driving force of the traveling motor}) \qquad (4)$$

$$\text{driving force difference } D \text{ between the left and right driving shafts}$$

$$= \rho_2 \times (1 + \rho_a) \times \rho_4 \times (\text{driving force of the adjusting motor}) \qquad (5)$$

$$\text{rotational speed N of the adjusting motor}$$

$$= \frac{\rho_2 \times (1 + \rho_a) \times \rho_4 \times \left( \begin{array}{c} \text{rotational speed difference} \\ \text{between the left and right shafts} \end{array} \right)}{2} \qquad (6)$$

[2-2. Second State]

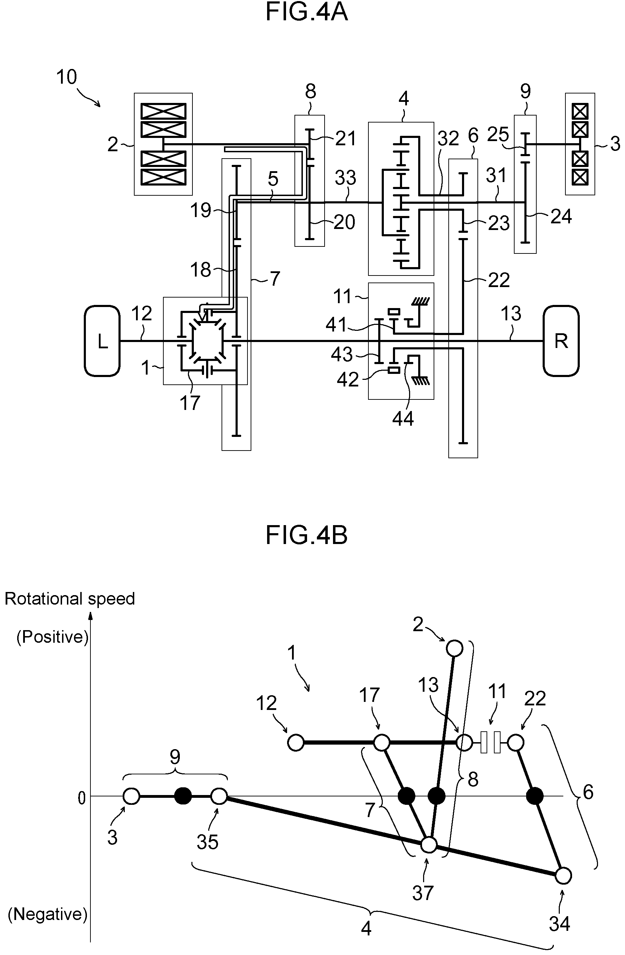

FIGs. 4A and 4B are a skeleton diagram and an alignment chart describing the power transmission route when the dog clutch 11 is in the second state, respectively. In the second state, as illustrated in FIG. 4A, the sleeve 42 of the dog clutch 11 is engaged only with the first hub 41 and is not engaged with the second hub 43 and the fixing hub 44 (released state). Consequently, the first gear train 6 is disconnected from the right shaft 13 and the ring gear 34 of the planetary gear mechanism 4 comes into a free-rotating state (idling state). Since the rotational speed N of the adjusting motor 3 is regarded to be zero when the differential apparatus 1 has no differential motion, the alignment chart of the planetary gear mechanism 4 is represented by an inclined straight line that assumes the rotational speed of the sun gear 35 is zero and that declines as the abscissa approaches the right end as illustrated in FIG. 4B. Consequently, the left and right wheels are driven only by the driving force transmitted from the traveling motor 2 through the second gear train 7 and the third gear train 8.

The traveling driving force F (total value) on the left and right wheels in the second state is based on the driving force of the traveling motor 2 and is given by the above Formula (4). In contrast, the dog clutch 11 is disengaged from the right shaft 13 and therefore, the driving force difference D (actively applied difference between the driving forces of the left shaft 12 and the right shaft 13) between the left and right driving shaft is zero. Even if the left shaft 12 and the right shaft 13 have a rotational speed difference, the rotational speed difference acts so as not to affect the rotational speed of the ring gear 34, so that the rotational speed N of the adjusting motor 3 is allowed to keep zero (i.e., the adjusting motor 3 is not activated).

[2-3. Third State]

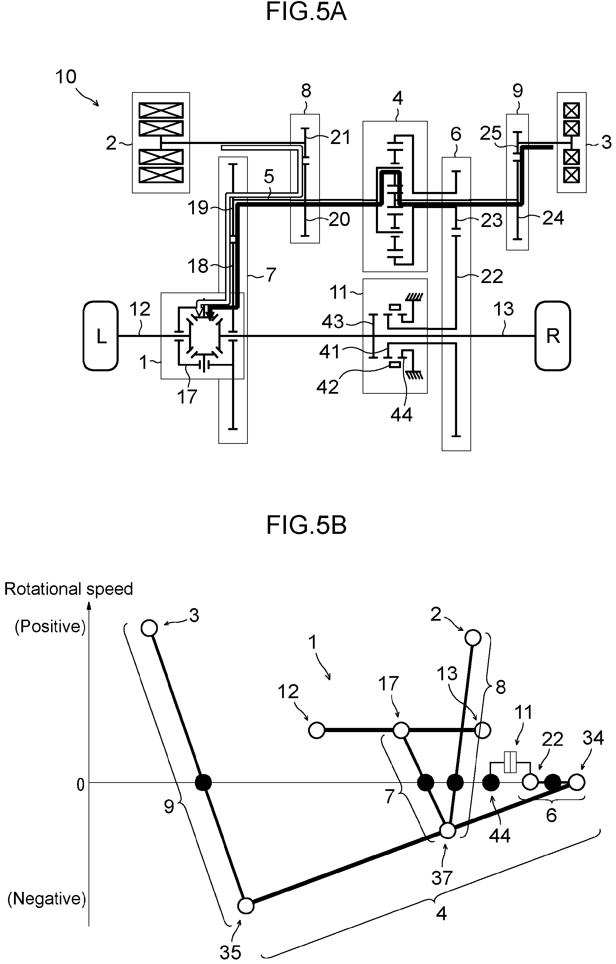

FIGs. 5A and 5B are a skeleton diagram and an alignment chart describing the power transmission route when the dog clutch 11 is in the third state, respectively. In the third state, as illustrated in FIG. 5A, the sleeve 42 of the dog clutch 11 is engaged with the fixing hub 44. Then the rotation of the right shaft side gear 22 and the ring gear side gear 23 of the first gear train 6 are restrained (locked), so that the rotation of the ring gear 34 of the planetary gear mechanism 4 comes into a restricted state (fixed state). Accordingly, as illustrated in FIG. 5B, the alignment chart of the planetary gear mechanism 4 is represented by an inclined straight line that assumes the rotational speed of the ring gear 34 is zero and that increases as the abscissa approaches the right end.

In the third state, the driving force (the black arrow of FIG. 5A) of the adjusting motor 3 in addition to the driving force (the white arrow of FIG. 5A) of the traveling motor 2 are transmitted to the left and right wheels. The driving force of the traveling motor 2 acts to drive the differential case 17 of the differential apparatus 1 through the second gear train 7 and the third gear train 8. The driving force of the adjusting motor 3 acts to drive the sun gear 35 in a direction that the rotational speed outputted from the planetary carrier shaft 33 of the planetary gear mechanism 4 increases. Then the driving force of the adjusting motor 3 is transmitted from the planetary gear mechanism 4 to the differential case 17 through the second gear train 7, so that driving force for traveling is generated.

The traveling driving force F (total value) on the left and right wheels in the third state corresponds to the sum of the driving force originated from the traveling motor 2 and the driving force originated from the adjusting motor 3, and is given by following Formula (7). Since the dog clutch 11 is disengaged from the right shaft 13, the driving force difference D (actively applied difference between the driving forces of the left shaft 12 and the right shaft 13) between the left and right shafts is regarded as zero. Meanwhile, the rotational speed N of the adjusting motor 3 is given by following Formula (8). The term "rotational speed of the differential case" in Formula (8) represents the rotational speed of the differential case 17 at the time point in question.

[Expression 5]

$$\text{traveling driving forc } F = \rho_2 \times \rho_3 \times \left( \begin{array}{c} \text{driving force originated} \\ \text{from the traveling motor} \end{array} \right)$$

$$+ \rho_2 \times (1 + \rho_a) \times \rho_4 \times \left( \begin{array}{c} \text{driving force originated} \\ \text{from the adjusting motor} \end{array} \right) \qquad (7)$$

$$\text{rotational speed } N \text{ of the adjusting motor}$$

$$= \rho_2 \times (1 + \rho_a) \times \rho_4 \times (\text{rotational speed of the differential case}) \qquad (8)$$

[3. Effects]

(1) The driving shaft 5 and the second gear train 7 of the present embodiment have a function of transmitting the driving force of the adjusting motor 3 to the left and right wheels (i.e., the left shaft 12 and the right shaft 13), in addition to a function of transmitting the driving force of the traveling motor 2 to the left and right wheels. By integrating two kinds of power transmission routes into the driving shaft 5 and the second gear train 7 and coupling the integrated power transmission routes to the differential case 17 of the differential apparatus 1, increase in the number of parts can be avoided and the traveling function and the driving force adjusting function can be achieved lightly and simply.

If a rotational speed difference or a driving force difference between the left and right wheels is intended to be actively generated while the vehicle is traveling, it is satisfactory that the adjusting motor 3 is activated to accord with the intended driving force difference. As illustrated in FIG. 3A, by activating the adjusting motor 3, the driving forces of the left shaft 12 and the right shaft 13 can be different driving forces, so that the balance of driving force between the left and right wheels can be freely controlled. Accordingly, the operation performance of the vehicle can be enhanced.

In contrast, when there is no need for actively generating a rotational speed difference or a driving force difference between the left and right wheels while the vehicle is traveling, it is satisfactory that the adjusting motor 3 is stopped. In this case, as illustrated in FIG. 3C, even when the adjusting motor 3 is in a state of stopping its operation, the effect of passively absorbing the rotational speed difference by the differential apparatus 1 is ensured, so that worsening of the posture of the vehicle when the vehicle is turning can be avoided.

(2) In the present embodiment, the reduction ratios pa, and p1-p4 are set on the basis of the above Formulae (1)-(3). By this setting, as illustrated in FIG. 3B, the rotation of the adjusting motor 3 can be stopped when the differential apparatus 1 has no differential motion, so that generation of unrequired rotation loss of the adjusting motor 3 when the vehicle is straightly traveling can be suppressed. In addition, since the driving force generated by the adjusting motor 3 does not affect the traveling driving force on the vehicle shaft, it is possible to suppress the worsening of the vehicle motion due to the interference with the traveling driving force on the vehicle shaft, which traveling driving force is generated by the traveling motor 2 (driving source). In addition, by providing the third gear train 8 and the fourth gear train 9, desired traveling driving force on the vehicle shaft and driving force for adjusting can be obtained without increasing the driving forces of the traveling motor 2 and the adjusting motor 3, and therefore increase of the sizes of the traveling motor 2 and the adjusting motor 3 can be suppressed.

(3) In the present embodiment, as illustrated in FIG. 1, the rotation shafts of the traveling motor 2, the adjusting motor 3, and the planetary gear mechanism 4 are arranged in parallel with the rotation shafts of the differential apparatus 1 (the left shaft 12 and the right shaft 13). This arrangement can eliminate the requirement of arranging gears having low transmission efficiency, such as bevel gears and hypoid gears, inside the gear trains 6-9, and allows the application of spur gears having superior efficiency. Accordingly, degradation of the power transmission efficiency can be suppressed.

(4) Interposing the dog clutch 11 (changeover mechanism) between the first gear train 6 and the right shaft 13 can switch between a state where distribution of the driving force to the left and right wheels by the adjusting motor 3 is achieved as illustrated in FIG. 3B and a state where the adjusting motor 3 is disconnected from the right shaft 13 as illustrated in FIG. 4B. Accordingly, since the rotation of the adjusting motor 3 can be stopped regardless of the presence or the absence of the differential motion of the differential apparatus 1 when, for example, the vehicle is traveling without requiring distribution of torque to the left and right wheels by the adjusting motor 3, it is possible to suppress a loss caused from the rotation of the adjusting motor 3, and degradation of the operation performance of the vehicle can be avoided.

(5) Providing the fixing hub 44 to the dog clutch 11 and controlling the dog clutch 11 to be in the third state can reduce the friction loss to drive the first gear train 6 and the ring gear 34 and thereby enhances the traveling efficiency of the vehicle. As illustrated in FIG. 5B, since the adjusting motor 3 is capable of generating driving force for traveling, the accelerability of the vehicle can be further enhanced.

[4. Modifications]

The foregoing embodiment is merely exemplary and has no intention to exclude various modifications and application of techniques not explicitly described in the embodiment. The structure of the embodiment can be variously modified without departing from the scope of the embodiment. The respective structures of the embodiment may be selected, omitted, or combined according to the requirement. For example, the above embodiment exemplifies the driving force adjustment apparatus 10 using the traveling motor 2 as the driving source of the vehicle, but alternatively may be an internal combustion engine such as a gasoline engine or a diesel engine in place of or in addition to the traveling motor 2.

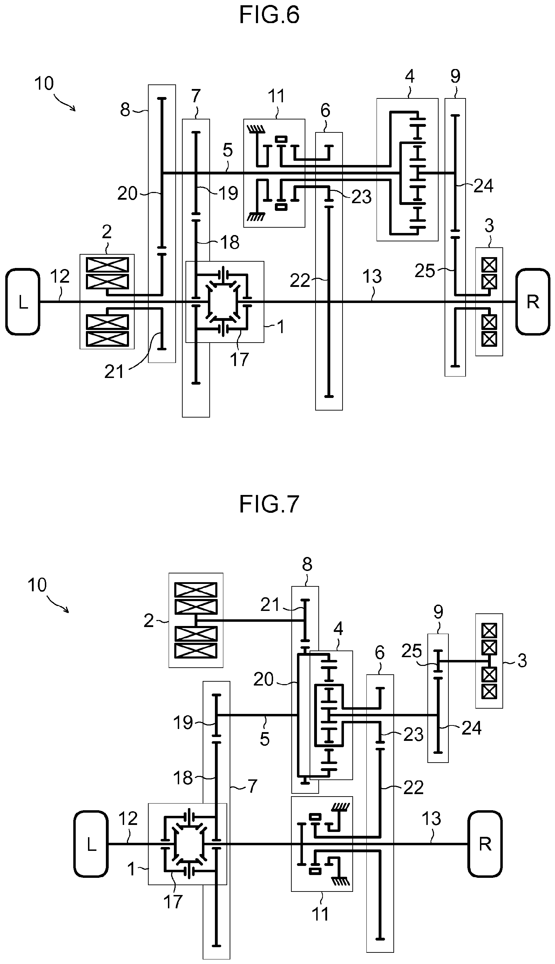

As illustrated in FIG. 6, the traveling motor 2 and the adjusting motor 3 may be coaxially arranged with the left shaft 12 and the right shaft 13. This arrangement allows the forward and rearward direction (longitudinal-direction) size of the vehicle to be smaller, so that the mountability of the driving force adjustment apparatus 10 on the vehicle can be enhanced. Alternatively, as illustrated in FIG. 7, the ring gear 34 of the planetary gear mechanism 4 may be integrated with the third gear train 8. This allows the size of the planetary gear mechanism 4 and the third gear train 8 in the vehicle widthwise direction to be smaller, so that the mountability of the driving force adjustment apparatus 10 on the vehicle can be further enhanced. In addition, this can prolong the left shaft 12 and the right shaft 13 and thereby lowering of grounding capability of the vehicle can be inhibited.

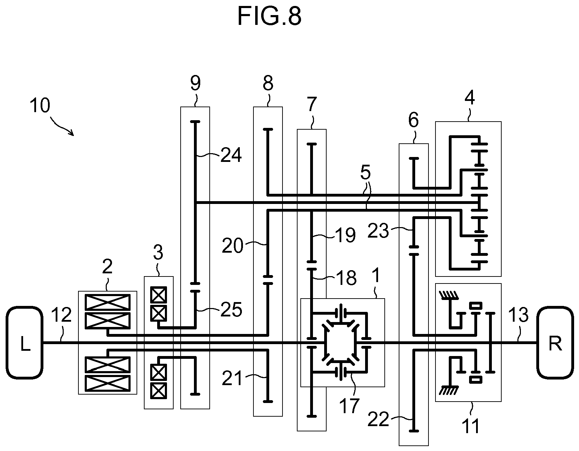

As illustrated in FIG. 8, the traveling motor 2 and the adjusting motor 3 may be disposed on the same side of the width-direction of the vehicle (in the example of FIG. 8, the left side) seen from the differential apparatus 1. In this case, it is preferable that the planetary gear mechanism 4 and the dog clutch 11 are arranged on the other side of the width-direction of the vehicle (in the example of FIG. 8, the right side) seen from the differential apparatus 1. This arrangement allows non-illustrated wire harnesses and electronic control unit for driving the motors to be collectively arranged on either side of the widthwise direction of the vehicle with ease. Accordingly, the mountability of the electric and electronic parts for control the motors on the vehicle can be enhanced.

The above embodiment has a structure that, among the three shaft elements included in the planetary gear mechanism 4, the planetary carrier shaft 33 is coupled to the driving shaft 5. Alternatively, the counterpart of coupling of the driving shaft 5 may be the sun gear shaft 31 or the ring gear shaft 32. The similar alternative is also applied to the coupling counterparts (on the side of the planetary gear mechanism 4) of the first gear train 6 and the fourth gear train 9. The first gear train 6 may be coupled to the left shaft 12 in place of the right shaft 13. The driving force adjustment apparatus 10 including the differential apparatus 1, the driving source, the adjusting motor 3, and the planetary gear mechanism 4 can obtain the same effects and advantages as the above embodiment by adopting a structure including at least the driving shaft 5, the first gear train 6, the second gear train 7, the third gear train 8, and the fourth gear train 9.

In the above embodiment, the mechanism of switching the power transmission state of the planetary gear system 4 among the three states is exemplified by the dog clutch 11, but may alternatively or additionally be an engaging element such as a friction clutch, an electromagnetic friction clutch, or a fluid coupling. The same effects and advantages as the above embodiment can be obtained by interposing at least a mechanism that can control the power transmission state between one element (the sun gear shaft 31, the ring gear shaft 32, and the planetary carrier shaft 33) of the planetary gear mechanism 4 and one of the left shaft 12 and the right shaft 13.

REFERENCE SIGNS LIST

1 differential apparatus (differential apparatus)
2 traveling motor (driving source)
3 adjusting motor
4 planetary gear mechanism
5 driving shaft
6 first gear train
7 second gear train
8 third gear train
9 fourth gear train
10 driving force adjustment apparatus
11 dog clutch (changeover mechanism)
12 left shaft
13 right shaft
17 differential case
41 first hub
42 sleeve
43 second hub
44 fixing hub (fixing element)

**Claims**

1. A driving force adjustment apparatus that includes a differential apparatus (1) that interposes a differential gear (15) supported by a differential case (17) between a left shaft (12) and a right shaft (13) of driving wheels, a driving source (2) that drives the driving wheels, an adjusting motor (3) that adjusts a driving force difference between the left shaft (12) and the right shaft (13), and a planetary gear mechanism (4) of three elements and two degree-of-freedom, the driving force adjustment apparatus further comprising:

    a driving shaft (5) that is coupled to a first element of the planetary gear mechanism (4) and that is coaxially arranged with the planetary gear mechanism (4);
    a first gear train (6) that adjusts a reduction ratio between a second element of the planetary gear mechanism (4) and one of the left shaft (12) and the right shaft (13) and that couples the second element to the one of the left shaft (12) and the right shaft (13);
    a second gear train (7) that adjusts a reduction ratio between the driving shaft (5) and the differential case (17) of the differential apparatus (1) and that couples the driving shaft (5) to the differential case (17);
    a third gear train (8) that adjusts a reduction ratio between the driving source (2) and the driving shaft (5) and that couples the driving source (2) to the driving shaft (5); and
    a fourth gear train (9) that adjusts a reduction ratio between a third element of the planetary gear mechanism (4) and the adjusting motor (3) and that couples the third element to the adjusting motor (3).

2. The driving force adjustment apparatus according to claim 1, wherein:
    the planetary gear mechanism (4), the first gear train (6), and second gear train (7) have reduction ratios that cause the adjusting motor (3) to have a rotational speed of zero when the differential apparatus (1) has no differential motion and that cause a driving force on the left shaft (12) generated by the adjusting motor (3) to have a same absolute value but an opposite sign to a driving force on the right shaft (13) generated by the adjusting motor (3).

3. The driving force adjustment apparatus according to claim 1 or 2, wherein rotation shafts of the driving source (2), the adjusting motor (3), and planetary gear mechanism (4) are arranged in parallel with a rotation shaft of the differential apparatus (1).

4. The driving force adjustment apparatus according to any one of claims 1-3, further comprising a changeover mechanism (11) that is interposed between one of the elements of the planetary gear mechanism (4) and one of the left shaft (12) and the right shaft (13) and that controls a power transmission state.

5. The driving force adjustment apparatus according to claim 4, wherein the changeover mechanism (11) has a function of fixing one of the elements of the planetary gear mechanism (4) to a fixing element (44).

**Patentansprüche**

1. Antriebskraft-Anpassvorrichtung, die eine Differentialvorrichtung (1), welche ein von einem Differentialgehäuse (17) getragenes Differentialgetriebe (15) zwischen einer linken Welle (12) und einer rechten Welle (13) von Antriebsrädern einfügt, eine Antriebsquelle (2), die die Antriebsräder antreibt, einen Verstellmotor (3), der eine Antriebskraft-Differenz zwischen der linken Welle (12) und der rechten Welle (13) anpasst, und einen Planetengetriebemechanismus (4) mit drei Elementen und zwei Freiheitsgraden einschließt, wobei die Antriebskraft-Anpassvorrichtung weiter umfasst:

   eine Antriebswelle (5), die mit einem ersten Element des Planetengetriebemechanismus (4) gekoppelt ist und die koaxial zum Planetengetriebemechanismus (4) eingerichtet ist;
   einen ersten Getriebestrang (6), der ein Untersetzungsverhältnis zwischen einem zweiten Element des Planetengetriebemechanismus (4) und einer aus der linken Welle (12) und der rechten Welle (13) anpasst und der das zweite Element mit der einen aus der linken Welle (12) und der rechten Welle (13) koppelt;
   einen zweiten Getriebestrang (7), der ein Untersetzungsverhältnis zwischen der Antriebswelle (5) und dem Differentialgehäuse (17) der Differentialvorrichtung (1) anpasst und der die Antriebswelle (5) mit dem Differentialgehäuse (17) koppelt;
   einen dritten Getriebestrang (8), der ein Untersetzungsverhältnis zwischen der Antriebsquelle (2) und der Antriebswelle (5) anpasst und der die Antriebsquelle (2) mit der Antriebswelle (5) koppelt; und
   einen vierten Getriebestrang (9), der ein Untersetzungsverhältnis zwischen einem dritten Element des Planetengetriebemechanismus (4) und dem Verstellmotor (3) anpasst und der das dritte Element mit dem Verstellmotor (3) koppelt.

2. Antriebskraft-Anpassvorrichtung nach Anspruch 1, wobei:
   der Planetengetriebemechanismus (4), der erste Getriebestrang (6) und zweite Getriebestrang (7) Untersetzungsverhältnisse aufweisen, die bewirken, dass der Verstellmotor (3) eine Drehzahl von null aufweist, wenn die Differentialvorrichtung (1) keine Differentialbewegung aufweist, und die bewirken, dass eine vom Verstellmotor (3) erzeugte Antriebskraft an der linken Welle (12) ein und denselben Absolutwert, aber ein umgekehrtes Vorzeichen zu einer vom Verstellmotor (3) erzeugten Antriebskraft an der rechten Welle (13) aufweist.

3. Antriebskraft-Anpassvorrichtung nach Anspruch 1 oder 2, wobei Drehwellen der Antriebsquelle (2), des Verstellmotors (3) und Planetengetriebemechanismus (4) parallel zu einer Drehwelle der Differentialvorrichtung (1) eingerichtet sind.

4. Antriebskraft-Anpassvorrichtung nach einem der Ansprüche 1-3, weiter einen Umschaltmechanismus (11) umfassend, der zwischen einem der Elemente des Planetengetriebemechanismus (4) und einer aus der linken Welle (12) und der rechten Welle (13) eingefügt ist und der einen Leistungsübertragungszustand steuert.

5. Antriebskraft-Anpassvorrichtung nach Anspruch 4, wobei der Umschaltmechanismus (11) eine Funktion des Fixierens eines der Elemente des Planetengetriebemechanismus (4) an einem Fixierelement (44) aufweist.

**Revendications**

1. Appareil de réglage de force d'entraînement qui inclut un appareil différentiel (1) qui interpose un engrenage différentiel (15) supporté par un boîtier de différentiel (17) entre un essieu gauche (12) et un essieu droit (13) de roues motrices, une source d'entraînement (2) qui entraîne les roues motrices, un moteur de réglage (3) qui règle une différence de force d'entraînement entre l'essieu gauche (12) et l'essieu droit (13), et un mécanisme de train planétaire (4) de trois éléments et deux degrés de liberté, l'appareil de réglage de force d'entraînement comprenant en outre :

   un arbre d'entraînement (5) qui est accouplé à un premier élément du mécanisme de train planétaire (4) et qui est agencé de manière coaxiale avec le mécanisme de train planétaire (4) ;
   un premier train d'engrenages (6) qui règle un rapport de réduction entre un deuxième élément du mécanisme de train planétaire (4) et un parmi l'essieu gauche (12) et l'essieu droit (13) et qui accouple le deuxième élément à un parmi l'essieu gauche (12) et l'essieu droit (13) ;

un deuxième train d'engrenages (7) qui règle un rapport de réduction entre l'arbre d'entraînement (5) et le boîtier de différentiel (17) de l'appareil différentiel (1) et qui accouple l'arbre d'entraînement (5) au boîtier de différentiel (17) ;

un troisième train d'engrenages (8) qui règle un rapport de réduction entre la source d'entraînement (2) et l'arbre d'entraînement (5) et qui accouple la source d'entraînement (2) à l'arbre d'entraînement (5) ; et

un quatrième train d'engrenages (9) qui règle un rapport de réduction entre un troisième élément du mécanisme de train planétaire (4) et le moteur de réglage (3) et qui accouple le troisième élément au moteur de réglage (3).

2. Appareil de réglage de force d'entraînement selon la revendication 1, dans lequel :
le mécanisme de train planétaire (4), le premier train d'engrenages (6), et le deuxième train d'engrenages (7) ont des rapports de réduction qui amènent le moteur de réglage (3) à avoir une vitesse de rotation nulle lorsque l'appareil différentiel (1) n'a aucun mouvement différentiel et qui amènent une force d'entraînement sur l'essieu gauche (12) générée par le moteur de réglage (3) à avoir une même valeur absolue mais un signe opposé par rapport à une force d'entraînement sur l'essieu droit (13) générée par le moteur de réglage (3) .

3. Appareil de réglage de force d'entraînement selon la revendication 1 ou 2, dans lequel des arbres de rotation de la source d'entraînement (2), du moteur de réglage (3), et du mécanisme de train planétaire (4) sont agencés en parallèle avec un arbre de rotation de l'appareil différentiel (1).

4. Appareil de réglage de force d'entraînement selon l'une quelconque des revendications 1 à 3, comprenant en outre un mécanisme d'inversion (11) qui est interposé entre un des éléments du mécanisme de train planétaire (4) et un parmi l'essieu gauche (12) et l'essieu droit (13) et qui commande un état de transmission de puissance.

5. Appareil de réglage de force d'entraînement selon la revendication 4, dans lequel le mécanisme d'inversion (11) a une fonction de fixation de l'un des éléments du mécanisme de train planétaire (4) à un élément de fixation (44).

# FIG.1

## FIG.2A

## FIG.2B

## FIG.2C

# FIG.3A

# FIG.3B

# FIG.3C

# FIG.4A

# FIG.4B

## FIG.5A

## FIG.5B

# FIG.6

# FIG.7

FIG.8

**EP 3 473 461 B1**

## REFERENCES CITED IN THE DESCRIPTION

### Patent documents cited in the description

- JP 2007177915 A

- JP 2014037884 A